# EUROPÄISCHE PATENTSCHRIFT

(11) **EP 3 440 289 B1**
(45) Veröffentlichungstag und Bekanntmachung des Hinweises auf die Patenterteilung: **01.05.2024**
(21) Anmeldenummer: 17719805.8
(22) Anmeldetag: 07.04.2017
(51) Int. Cl.: E04G 21/04, B29C 67/00, E04B 1/35, B25J 9/00

(54) **VORRICHTUNG, EIN SYSTEM UND EIN VERFAHREN ZUM BAU STATIONÄRER STRUKTUREN AUF EINE ARBEITSFLÄCHE**
DEVICE, A SYSTEM AND A METHOD FOR BUILDING STATIONARY STRUCTURES ON A WORKING SURFACE
DISPOSITIF, SYSTÈME ET PROCÉDÉ PERMETTANT DE CONSTRUIRE DES STRUCTURES STATIONNAIRES SUR UNE SURFACE DE TRAVAIL

(30) Priorität: 07.04.2016 DE 102016004275
(43) Veröffentlichungstag der Anmeldung: 13.02.2019
(73) Patentinhaber: Liebherr-Werk Biberach GmbH, 88400 Biberach an der Riss (DE)
(72) Erfinder: BRAMBERGER, Robert, 82293 Mittelstetten/Vogach (DE)
(74) Vertreter: Laufhütte, Dieter
(86) Internationale Anmeldenummer: PCT/EP2017/000448
(87) Internationale Veröffentlichungsnummer: WO 2017/174201

(56) Entgegenhaltungen:
- WO-A2-2009/037550
- US-A1- 2009 066 100
- US-B1- 6 826 452

## Beschreibung

Die Erfindung betrifft eine Vorrichtung, ein System und ein Verfahren zum Bau stationärer Strukturen auf eine Arbeitsfläche.

Die Technologie des 3D-Drucks, wobei dreidimensionale Objekte durch freies Aufspritzen von Kunststoffen auf eine Arbeitsfläche hergestellt werden, ist bekannt. Dabei verwendet der Drucker eine Datei mit Informationen über die dreidimensionale Form des herzustellenden Objekts, um eine beweglich über der Arbeitsfläche angeordnete Düse entsprechend hinsichtlich Position und Abgabe anzusteuern. Bislang war diese Technologie jedoch im Wesentlichen auf Anwendungen beschränkt, in denen Kunststoffe zum Einsatz kamen und das hergestellte Objekt nach dessen Fertigstellung von der Arbeitsfläche entnommen wird. Durch entsprechendes Einlegen von vorgefertigten Zusatzteilen ist auch die Herstellung heterogener Objekte denkbar.

Ebenso bekannt ist es, in der Herstellung von stationären Betonbauteilen sogenannten Spritzbeton zu verwenden. Beispielsweise werden beim Nassspritzverfahren Zement, Zuschlagstoffe und Wasser zusammengemischt, und mittels einer Mörtelpumpe zu einer Spritzdüse befördert, von wo aus die Mischung mittels der in der Düse zugegebenen Druckluft zerstäubt und aufgetragen wird. Daneben ist auch das Trockenspritzverfahren bekannt, bei dem Zement und Zuschlagstoff trocken zusammengemischt und in einem Druckluftstrom freischwimmend durch eine Rohr- oder Schlauchleitung zu einer Mischdüse befördert werden. Im Düsenbereich wird dem Trockengemisch Wasser zugeführt, um die Mischung mit dem nötigen Anmachwasser zu versehen, und anschließend in einem ununterbrochenen Strahl aufgetragen.

US 2009/066100 A1 offenbart eine Vorrichtung zum Bau stationärer Strukturen auf eine Arbeitsfläche.

Aufgabe der Erfindung ist es, eine Vorrichtung und ein System bereitzustellen, um in Anlehnung an die Technologie des 3D-Drucks eine Teilautomatisierung oder Automatisierung im Bau stationärer Objekte zu ermöglichen. Ferner soll ein Verfahren zur Verwendung derartiger Vorrichtungen und Systeme bereitgestellt werden.

Vor diesem Hintergrund betrifft die Erfindung eine Vorrichtung gemäß Anspruch 1,
zum Bau stationärer

Strukturen auf eine Arbeitsfläche.

Die Arbeitsfläche umfasst die Gesamtheit der horizontalen Positionen, an denen der Arbeitskopf angeordnet erden kann. Sie hat daher die Form eines Vielecks, deren Eckpunkte durch diejenigen Stellen des Gerüsts definiert werden, an denen die Steuerseile vom Gerüst laufen. Natürlich kann die Arbeitsfläche auch willkürlich innerhalb dieser Grenzen definiert werden.

In einer Ausführungsform entspricht die Zahl der oberen Steuerseile der Zahl der unteren Steuerseile, wobei korrespondierende Paare aus oberen und unteren Steuerseilen vorzugsweise übereinander verlaufen.

In einer Ausführungsform sind wenigstens drei obere Steuerseile und/oder wenigstens drei untere Steuerseile vorgesehen. In einer Ausführungsform sind genau vier obere und genau vier untere Steuerseile vorgesehen.

In einer Ausführungsform handelt es sich bei den Steuerseilen um Faserseile. Dies stellt eine geeignete Flexibilität und Zugfestigkeit der Seile sicher. Beispiele umfassen Kunstfasern wie Polyester oder dergleichen.

In einer Ausführungsform umfasst wenigstens eines der Steuerseile eine Stromleitung und/oder eine Datenleitung. So kann der Arbeitskopf mit Strom versorgt werden bzw. kann ein reibungsfreier Datenfluss sichergestellt werden.

In einer Ausführungsform umfasst der Arbeitskopf eine Kommunikationseinheit mit einer Schnittstelle für die drahtlose Kommunikation zum Datenempfang.

In einer Ausführungsform umgibt das Gerüst die Arbeitsfläche kontinuierlich.

In einer Ausführungsform besteht das Gerüst aus diskontinuierlich um die Arbeitsfläche verteilten Gerüstelementen.

Da die Stellen des Gerüsts, an denen die Steuerseile vom Gerüst laufen, ein regelmäßiges Vieleck definieren, kann auch das kontinuierliche Gerüst die Form eines regelmäßigen Vielecks haben oder können die Gerüstelemente des diskontinuierlichen Gerüsts an Eckpunkten eines Vielecks angeordnet sein. Sofern vier obere und/oder vier untere Steuerseile vorgesehen sind, können die Stellen des Gerüsts, an denen die Steuerseile vom Gerüst laufen, ein Rechteck definieren.

Entsprechend kann Gerüst die Form eines Rechtecks haben. Entsprechendes gilt für drei obere und/oder untere Steuerseile (Dreieck), fünf obere und/oder untere Steuerseile (Fünfeck) und weitere Zahlen an Steuerseilen.

In einer Ausführungsform ist jedem Steuerseil ein eigener Aktor zugeordnet.

In einer Ausführungsform umfasst jeder Aktor einen Antriebsmotor, vorzugsweise einen Elektromotor, und/oder ein Führungsrad für das Steuerseil.

In einer Ausführungsform sind die Steuerseile fest im Arbeitskopf verankert. Die Steuerseile können in dieser Ausführungsform also nicht aus dem Arbeitskopf ausgefahren oder in diesen eingezogen werden.

In einer anderen Ausführungsform wird das obere Steuerseil eines Paars am Arbeitskopf umgelenkt und führt als unteres Steuerseil desselben Paars zum Gerüst zurück. In dieser Ausführungsform kann am Gerüst ein gemeinsamer Aktor für das obere und untere Steuerseil des Paars vorgesehen sein.

Das Gerüst ist höhenverstellbar, insbesondere sind die Stellen des Gerüsts von denen die Steuerseile laufen höhenverstellbar. Zu diesem Zweck kann das Gerüst beispielsweise ein mechanisches, hydraulisches, pneumatisches, magnetisches oder kombiniertes System aufweisen, anhand dessen das ganze Gerüst oder Teile des Gerüsts angehoben und/oder abgesenkt werden kann bzw. können. Geeignete mechanische Systeme involvieren beispielsweise Zugseile.

Der Arbeitskopf umfasst eine Düse für einen spritzfähigen Baustoff und vorzugsweise Spritzbeton, die anhand einer Leitung mit einer
Baustoffquelle in Verbindung steht. Dies ermöglicht den Bau dreidimensionaler stationärer Objekte auf der Arbeitsfläche durch Aufspritzen von Beton.

In einer Ausführungsform umfasst der Arbeitskopf eine Hebevorrichtung für vorgefertigte Bauteile. Dies ermöglicht den vorzugsweise automatisierten oder teilautomatisierten Transport vorgefertigter Bauteile von einem innerhalb der Reichweite des Arbeitskopfs befindlichen Magazin, das im einfachsten Fall durch eine Freifläche oder Plattform gebildet werden kann, an eine Zielposition auf der Arbeitsfläche. So wird nicht nur ein automatisierter oder teilautomatisierter Bau homogener Strukturen sondern auch ein automatisierter oder teilautomatisierter Bau heterogener Strukturen ermöglicht.

In einer Ausführungsform umfasst die Hebevorrichtung eine Greifvorrichtung und/oder eine Saugvorrichtung. Letzteres kann zum Transport von Objekten mit einer glatten Oberfläche wie beispielsweise Fließen oder Glasscheiben dienen.

Die Vorrichtung
dient dem automatisierten Bau stationärer Strukturen auf einer Arbeitsfläche auf Grundlage von Informationen über die dreidimensionale Gestalt dieser Strukturen, wobei die Steuereinheit die Aktoren auf der Grundlage dieser Informationen ansteuert. Die Informationen
stammen aus einer Steuerdatei , bei der es sich um eine BIM- oder CAD-Datei handelt. Die Steuerdatei kann entweder in der Steuereinheit oder an externer Stelle auf einer Recheneinheit hinterlegt sein. Im letzteren Fall umfasst die Vorrichtung eine Kommunikationseinheit, die einen Datenempfang von einer externen Recheneinheit ermöglicht, entweder kabellos oder unter Verwendung von Kabeln.

Was die Steuerdatei betrifft, so ist der Einsatz sogenannter digitale Bauwerkdatenmodelle für das Errichten und Bearbeiten von Bauwerken anhand einer erfindungsgemäßen Vorrichtung angedacht. Ein derartiges digitales Bauwerkdatenmodell kann anhand des sogenannten Building Information Modelling (BIM) erstellt werden und die Datenbasis enthält digitale Informationen über das zu errichtende bzw. zu bearbeitende Bauwerk. Solche Bauwerkdatenmodelle oder BIM-Modelle sind computerlesbare Dateien oder Dateikonglomerate und ggfs. verarbeitende Computerprogramm-Bausteine zum Verarbeiten solcher Dateien, in denen Informationen und Charakteristika, die das Bauwerk und dessen relevante Eigenschaften in Form digitaler Daten beschreiben. Insbesondere können solche Bauwerkdatenmodelle CAD-Daten zur Visualisierung des Bauwerks bzw. von Teilen davon enthalten, aber auch andere relevante Informationen über das Bauwerk, beispielsweise einen Zeitplan zu dessen Errichtung oder logistische Informationen über benötigte Hilfsmittel umfassen. Das Bauwerkdatenmodell kann digital verschickt werden und so der Steuereinheit der Vorrichtung zur Verfügung gestellt werden.

In Kontext der vorliegenden Erfindung ist in einer Ausführungsform vorgesehen, dass der Betrieb des Seilroboters anhand der Daten eines BIM- bzw. Bauwerkdatenmodells gesteuert wird. Die Daten können in der Vorrichtung lokal hinterlegt sein oder extern abgerufen werden, beispielsweise durch eine LAN-Verbindung oder drahtlos, beispielsweise über das Internet.

Eine Ausführungsform der Erfindung betrifft daher auch ein System umfassend eine erfindungsgemäße Vorrichtung und eine externe Recheneinheit, wobei die externe Recheneinheit und die erfindungsgemäße Vorrichtung jeweils eine Kommunikationseinheit aufweisen, um eine Datenübertragung von der externen Recheneinheit an die erfindungsgemäße Vorrichtung zu ermöglichen. Geeignete Kommunikationswege umfassen beispielsweise LAN und/oder WWW.

In einer Ausführungsform ist eine Erfassungseinrichtung vorgesehen, die Strukturen auf der Arbeitsfläche erkennen und Informationen an die Steuereinheit oder eine externe Recheneinheit übermitteln kann. Die Erfassungseinrichtung kann an der Vorrichtung selbst oder extern angeordnet sein, um ein System umfassend die erfindungsgemäße Vorrichtung und die externe Erfassungseinrichtung und gegebenenfalls eine externe Recheneinheit zu bilden. Anhand einer Auswertung der Daten der Erfassungseinrichtung können der Baufortschritt erkannt und/oder eine Qualitätskontrolle durchgeführt werden.

In einer Ausführungsform ist ein Kran vorgesehen, um ein System umfassend die erfindungsgemäße Vorrichtung und den Kran und gegebenenfalls ferner eine externe Erfassungseinrichtung und/oder eine externe Recheneinheit zu bilden. der Bei dem Kran kann es sich beispielsweise um einen Turmdrehkran handeln. Der Kran kann dabei als Transportgerät wirken, um beispielsweise Materialien für die Baustoffquelle und/oder Bauteile für das Magazin anzuholen oder um Bauteile auf die Arbeitsfläche und/oder Strukturen zu transportieren.

In einer Ausführungsform ist vorgesehen, dass das System einen Sensor zur Überwachung des Baufortschritts umfasst, der beispielsweise am Kran angeordnet sein kann. Geeignete Sensoren umfassen beispielsweise Ultraschall-, Radar, Infrarot- oder Lasersensoren. Anhand solcher Sensoren kann eine Überwachung des Baufortschritts vorgenommen werden, wobei die Messdaten der Sensoren mit der Datenbasis aus beispielsweise einem BIM-Modell abgeglichen werden können. Es kann vorgesehen sein, auf der Grundlage des Abgleichs die Steuerdaten zu modifizieren, wenn eine Abweichung vom Soll festgestellt wird, die ausgeglichen werden soll.

Der Kran kann ebenfalls eine Steuereinheit und eine Kommunikationseinheit aufweisen, sodass Steuerinformationen von einer externen Recheneinheit empfangen werden können.

Die Erfindung betrifft auch ein Verfahren
gemäß Anspruch 12 zum Bau stationärer Strukturen auf eine Arbeitsfläche unter Verwendung einer erfindungsgemäßen Vorrichtung gemäß Anspruch 1 oder eines Systems gemäß Anspruch 8, wobei ein spritzfähiger Baustoff aus der Düse des Arbeitskopfes auf die Arbeitsfläche oder auf bestehende Strukturen auf der Arbeitsfläche aufgespritzt wird. Vorzugsweise erfolgt der Bau der Strukturen durch Freiformspritzen, also ohne die Verwendung von Verschalungen. Alternativ können auch Verschalungen zum Einsatz kommen.

In einer Ausführungsform handelt es sich bei dem spritzfähigen Baustoff um Spritzbeton und das Verfahren bzw. die Vorrichtung dienen dem Bau stationärer Strukturen aus oder umfassend Beton. In einer Ausführungsform handelt es sich bei dem Verfahren um ein Nassspritzverfahren. Alternativ kann es sich um ein Trockenspritzverfahren handeln.

Im Rahmen des erfindungsgemäßen Verfahrens kann vorgesehen sein, dass die Bewegung des Arbeitskopfes und/oder die Abgabe des spritzfähigen Baustoffs anhand von Informationen aus der Steuerdatei gesteuert werden. Die Bewegung des Arbeitskopfes wird durch Einziehen und Ausfahren der Steuerseile hervorgerufen.

Zusätzlich kann im Rahmen des erfindungsgemäßen Verfahrens vorgesehen sein, dass der Transport vorgefertigter Bauteile auf die Arbeitsfläche oder auf der Arbeitsfläche anhand von Informationen aus der Steuerdatei gesteuert wird. Dabei wird die Hebevorrichtung angesteuert.

Weitere Einzelheiten und Vorteile der Erfindung ergeben sich aus dem anhand der Figuren erläuterten Ausführungsbeispiel. In den Figuren zeigen:

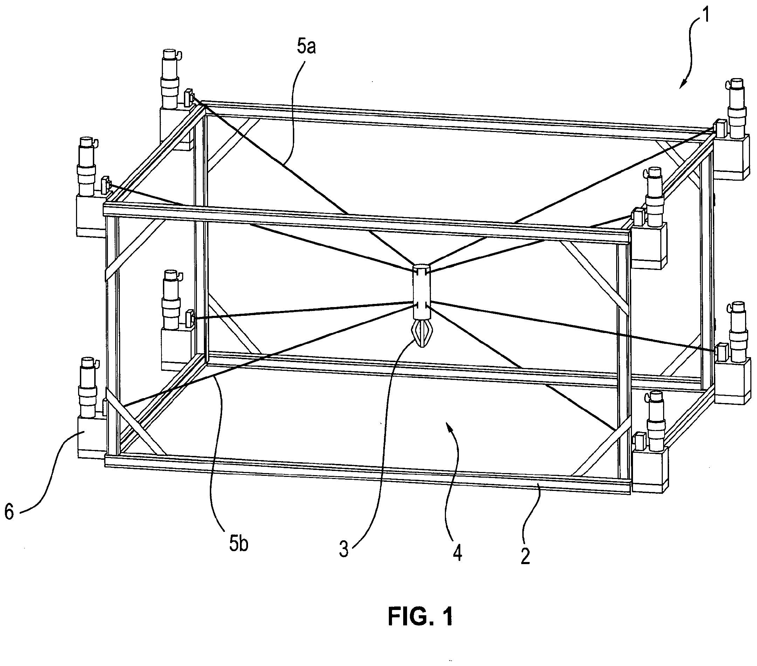

- Figur 1:: eine Darstellung einer erfindungsgemäßen Vorrichtung;

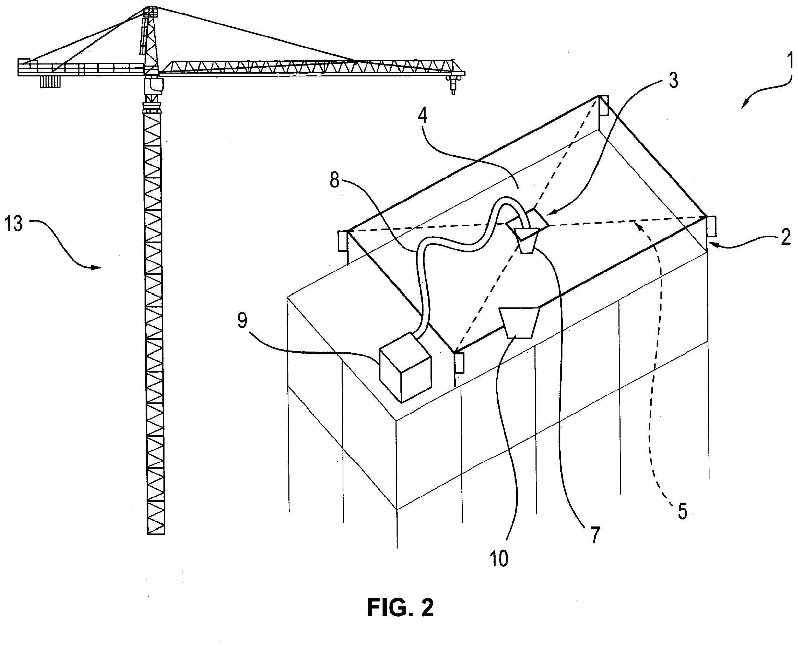

- Figur 2:: eine Darstellung eines erfindungsgemäßen Systems umfassend die Vorrichtung gemäß Figur 1 und einen Turmdrehkran; und

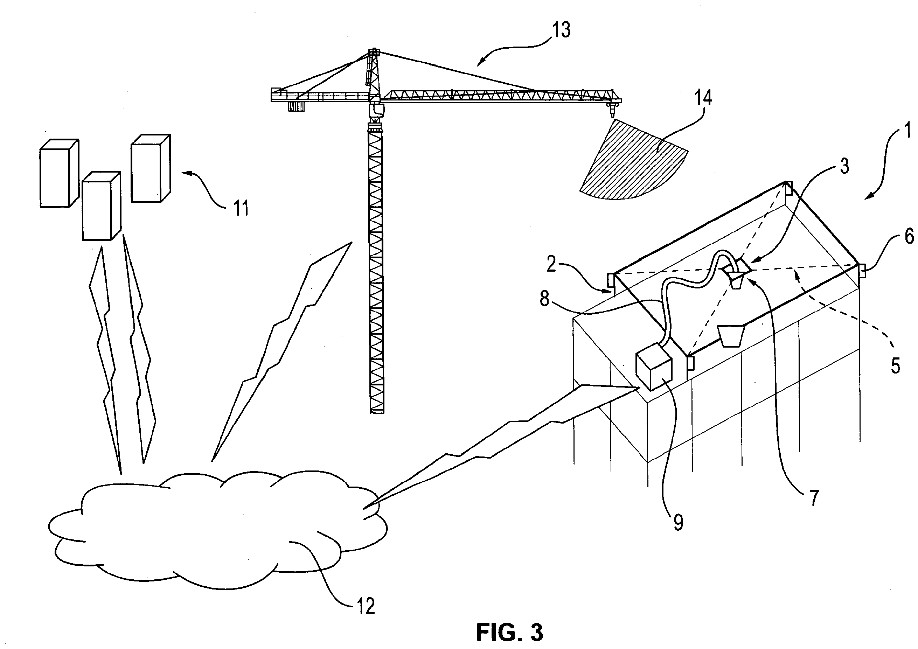

- Figur 3:: eine Darstellung eines erfindungsgemäßen Systems umfassend die Vorrichtung gemäß Figur 1, einen Turmdrehkran und eine externe Recheneinheit.

Die erfindungsgemäße Vorrichtung ist allgemein mit dem Bezugszeichen 1 gekennzeichnet. Sie umfasst ein Gerüst 2 und einen Arbeitskopf 3, wobei das Gerüst 2 eine Arbeitsfläche 4 umgibt. Der Arbeitskopf 3 ist mit vier Paaren an oberen Steuerseilen 5a und unteren Steuerseilen 5b am Gerüst 2 gehalten und oberhalb der Arbeitsfläche 4 angeordnet. Die oberen Steuerseile 5a laufen oberhalb des Arbeitskopfs 3 vom Gerüst 2 und die unteren Steuerseile 5b unterhalb des Arbeitskopfs 3. Alle Steuerseile 5 sind fest im Arbeitskopf 3 verankert. Bei den Steuerseilen 5a und 5b handelt es sich allesamt um Faserseile. In einem der unteren Steuerseile 5b ist eine Stromleitung und eine Datenleitung integriert, um den Arbeitskopf mit Strom zu versorgen und um einen reibungsfreien Datenfluss sicherzustellen.

Die Steuerseile 5 sind so am Gerüst 2 gelagert, dass sie aus dem Gerüst 2 ausgefahren und zum Gerüst 2 eingezogen werden können, um die Position des Arbeitskopfs 3 oberhalb der Arbeitsfläche 4 zu verändern. Im Lagerungsbereich aller Steuerseile 5 sind zu diesem Zweck Elektromotoren 6 vorgesehen.

Eine in den Figuren nicht näher dargestellte Steuereinheit steuert die Elektromotoren 6 auf der Grundlage von Steuerinformationen an, um eine Bewegung des Arbeitskopfes 3 über der Arbeitsfläche 4 zu steuern.

Das Gerüst 2 ist kontinuierlich um die Arbeitsfläche 4 herum angeordnet und hat die Gestalt eines Rechtecks. Anhand eines in den Figuren nicht näher dargestellten Höhenverstellsystems kann es insgesamt angehoben werden.

Der Arbeitskopf 3 hält eine Düse 7 für Spritzbeton, wobei die Düse 7 anhand einer Leitung 8 mit einer Betonquelle 9 in Verbindung steht. Der Arbeitskopf kann ferner eine in der Figur nicht näher dargestellte Hebevorrichtung aufweisen, um vorgefertigte Bauteile von einem Magazin 10 an eine Zielposition auf der Arbeitsfläche 4 zu transportieren. Dabei kann es sich beispielsweise um eine Greifvorrichtung oder eine Saugvorrichtung handeln.

Die Steuerinformationen für die Steuereinheit stammen aus einer Steuerdatei, die auf einer externen Recheneinheit 11 hinterlegt ist. Die externe Recheneinheit 11 und die erfindungsgemäße Vorrichtung 1 weisen jeweils eine in der Figur nicht näher dargestellte Kommunikationseinheit auf, um eine Übertragung 12 der Steuerinformationen der Steuerdatei von der externen Recheneinheit 11 an die erfindungsgemäße Vorrichtung 1. Die Steuerinformationen werden dabei aus einem BIM-Modell bezogen.

In einer Ausführungsform ist eine in der Figur nicht näher dargestellte Erfassungseinrichtung vorgesehen, die Strukturen auf der Arbeitsfläche erkennen und Informationen an die Steuereinheit oder am Übertragungsweg 12 an die externe Recheneinheit 11 übermitteln kann.

Ferner ist ein Turmdrehkran 13 vorgesehen, um Materialien für die Betonquelle 9 und Bauteile für das Magazin 10 zu transportieren. Der Kran 13 weist ebenfalls nicht näher dargestellte Steuer- und Kommunikationseinheiten auf, um Steuerinformationen von der externen Recheneinheit 11 empfangen zu können.

Die Vorrichtung 1, die externe Steuereinheit 11 und der Kran 13 können im Rahmen des automatisierten oder teilautomatisierten Baus von dreidimensionalen stationären Strukturen auf der Arbeitsfläche 4 auf der Grundlage der Steuerinformationen aus der Steuerdatei zusammenwirken. Dabei wird Spritzbeton im Nass- oder Trockenspritzverfahren frei auf die Arbeitsfläche 4 aufgespritzt. Die Bewegung des Arbeitskopfes 3 und die Abgabe des Spritzbetons werden anhand von Informationen aus der Steuerdatei gesteuert. Die Bewegung des Arbeitskopfes 3 wird durch Einziehen und Ausfahren der Steuerseile 5 hervorgerufen, wobei die Steuereinheit die Motoren 6 anhand von Informationen aus der Steuerdatei ansteuert. Zusätzlich kann durch Bewegung des Arbeitskopfes 3 und Ansteuerung der Hebevorrichtung ein Transport vorgefertigter Bauteile vom Magazin 10 auf die Arbeitsfläche 4 oder auf der Arbeitsfläche 4 erfolgen.

Mit dem Bezugszeichen 14 ist ein Überwachungsfeld am Kran gekennzeichnet, das einen Abschnitt des Erfassungsbereichs eines Sensors symbolisieren soll, der am Kran angeordnet ist und mit der externen Recheneinheit 11 in Verbindung steht. Anhand dieses Sensors wird der Baufortschritt überwacht und die externe Recheneinheit 11 ist so ausgebildet, dass die vom Sensor empfangenen Messdaten mit der Datenbasis aus dem BIM-Modell abgeglichen werden. Sofern eine Abweichung vom Soll festgestellt wird, werden die Steuerdaten für den Seilroboter modifiziert, um die Abweichung auszugleichen.

## Patentansprüche

1. Vorrichtung (1) zum Bau stationärer Strukturen auf eine Arbeitsfläche (4),
wobei die Vorrichtung (1) ein Gerüst (2) aufweist, das um die Arbeitsfläche (4) herum angeordnet ist,
wobei ein Arbeitskopf (3) vorgesehen ist, der mit Hilfe mehrerer Steuerseile (5) am Gerüst (2) gehalten und oberhalb der Arbeitsfläche (4) angeordnet ist, wobei der Arbeitskopf (3) eine Düse (7) für einen spritzfähigen Baustoff und vorzugsweise Spritzbeton umfasst, wobei die Düse (7) anhand einer Leitung (8) mit einer Baustoffquelle (9) in Verbindung steht,
wobei obere Steuerseile (5a) vorgesehen sind, die oberhalb des Arbeitskopfs (3) vom Gerüst (2) laufen,
wobei untere Steuerseile (5b) vorgesehen sind, die unterhalb des Arbeitskopfs (3) vom Gerüst (2) laufen,
wobei alle Steuerseile (5) aus dem Gerüst (2) ausgefahren und zum Gerüst (2) eingezogen werden können, um die Position des Arbeitskopfs (3) zu verändern, und
wobei eine Steuereinheit vorgesehen ist, die mit Aktoren (6) zum Ausfahren und Einziehen der Steuerseile (5) verbunden ist und ausgebildet ist, diese Aktoren (6) zur Veränderung der Position des Arbeitskopfs (3) anzusteuern,
wobei die Steuereinheit ausgebildet ist, um die Aktoren (6) und somit die Position des Arbeitskopfes (3) und/oder die Baustoffabgabe über die Düse (7) auf der Grundlage von Steuerinformationen aus einer Steuerdatei automatisch oder teilautomatisch anzusteuern,
**dadurch gekennzeichnet, dass** es sich bei der Steuerdatei um eine BIM- oder CAD-Datei handelt, und
dass das Gerüst (2) höhenverstellbar ausgebildet ist.

2. Vorrichtung nach Anspruch 1, **dadurch gekennzeichnet, dass** die Zahl der oberen Steuerseile (5a) der Zahl der unteren Steuerseile (5b) entspricht, wobei korrespondierende Paare aus oberen und unteren Steuerseilen (5a, 5b) vorzugsweise übereinander verlaufen und/oder dass wenigstens drei obere Steuerseile (5a) und/oder wenigstens drei untere Steuerseile (5b) und/oder wenigstens drei Paare an Steuerseilen (5a, 5b) vorgesehen sind und/oder dass die Steuerseile (5) fest im Arbeitskopf (3) verankert sind.

3. Vorrichtung nach einem der vorhergehenden Ansprüche, **dadurch gekennzeichnet, dass** jedem Steuerseil (5) ein eigener Aktor (6) zugeordnet ist und/oder dass jeder Aktor (6) einen Antriebsmotor und vorzugsweise Elektromotor und/oder ein Führungsrad für das Steuerseil (5) umfasst.

4. Vorrichtung nach einem der vorhergehenden Ansprüche, **dadurch gekennzeichnet, dass** wenigstens eines der Steuerseile eine Stromleitung und/oder eine Datenleitung umfasst.

5. Vorrichtung nach einem der vorhergehenden Ansprüche, **dadurch gekennzeichnet, dass** das Gerüst (2) die Arbeitsfläche (4) kontinuierlich umgibt oder aus diskontinuierlich um die Arbeitsfläche (4) verteilten Gerüstelementen besteht.

6. Vorrichtung nach einem der vorhergehenden Ansprüche, **dadurch gekennzeichnet, dass** der Arbeitskopf (3) eine Hebevorrichtung für vorgefertigte Bauteile umfasst, vorzugsweise eine Greifvorrichtung und/oder eine Saugvorrichtung.

7. Vorrichtung nach Anspruch 6, **dadurch gekennzeichnet, dass** die Steuereinheit ausgebildet ist, auch die Hebevorrichtung auf der Grundlage der Steuerinformationen aus einer Steuerdatei automatisch oder teilautomatisch anzusteuern.

8. System umfassend eine Vorrichtung (1) nach einem der vorhergehenden Ansprüche und eine externe Recheneinheit (11) und/oder eine an der Vorrichtung (1) oder extern angeordnete Erfassungseinrichtung und/oder einen Kran (13).

9. System nach Anspruch 8, **dadurch gekennzeichnet, dass** die erfindungsgemäße Vorrichtung (1) und die externe Recheneinheit (11) und/oder externe Erfassungseinrichtung und/oder der Kran (13) jeweils eine Kommunikationseinheit aufweisen, um eine wechselseitige oder einseitige Datenübertragung (12) zu ermöglichen.

10. System nach Anspruch 8 oder 9, **dadurch gekennzeichnet, dass** die Erfassungseinrichtung ausgebildet ist, um Strukturen auf der Arbeitsfläche (4) erkennen und Informationen über das Aussehen der Strukturen an die Steuereinheit oder eine externe Recheneinheit (11) übermitteln zu können.

11. System nach einem der Ansprüche 8 bis 10, **dadurch gekennzeichnet, dass** es sich bei dem Kran (13) um einen Turmdrehkran handelt.

12. Verfahren zum automatisierten oder teilautomatisierten Bau stationärer Strukturen auf eine Arbeitsfläche (4) unter Verwendung einer Vorrichtung (1) nach einem der Ansprüche 1 bis 7 oder eines Systems nach einem der Ansprüche 8 bis 11, wobei ein spritzfähiger Baustoff aus einer am Arbeitskopf (3) gehaltenen oder angeordneten Düse (7) vorzugsweise frei auf die Arbeitsfläche (4) oder auf bestehende Strukturen auf der Arbeitsfläche (4) aufgespritzt wird und wobei eine Bewegung des Arbeitskopfes (3) wird durch Einziehen und Ausfahren der Steuerseile (5) hervorgerufen.

13. Verfahren nach Anspruch 12, **dadurch gekennzeichnet, dass** es sich bei dem spritzfähigen Baustoff um Spritzbeton handelt, wobei es sich bei dem Verfahren vorzugsweise um ein Nass- oder Trockenspritzverfahren handelt.

14. Verfahren nach Anspruch 12 oder 13, **dadurch gekennzeichnet, dass** die Bewegung des Arbeitskopfes (3) und die Abgabe des spritzfähigen Baustoffs und/oder der Transport vorgefertigter Bauteile auf die Arbeitsfläche oder auf der Arbeitsfläche anhand von Informationen aus einer Steuerdatei gesteuert wird.

## Claims

1. Device (1) for building stationary structures on a work surface (4),
wherein the device (1) comprises a scaffold (2), which is arranged around the work surface (4),
wherein a working head (3) is provided, which, with the help of multiple control cables (5), is held on the scaffold (2) and is arranged above the work surface (4), wherein the working head (3) comprises a nozzle (7) for a sprayable building material and preferably shotcrete, wherein the nozzle (7) preferably, by means of a line (8), is communicated with a building material source (9),
wherein upper control cables (5a) are provided, which run above the working head (3) from the scaffold (2),
wherein lower control cables (5b) are provided, which run below the working head (3) from the scaffold (2),
wherein all control cables (5) can be extended out of the scaffold (2) and can be retracted to the scaffold (2), in order to change the position of the working head (3), and
wherein a control unit is provided, which is connected with actuators (6) for the extending and retracting of the control cables (5), and is configured to actuate these actuators (6) to change the position of the working head (3),
wherein the control unit is configured to automatically or semi-automatically actuate the actuators (6), and thus the position of the working head (3) and/or the building material output via the nozzle (7) and/or the lifting device, on the basis of control information from a control file, **characterized in that** the control file advantageously is a BIM or CAD file, and that the scaffold (2) is configured height-adjustably.

2. Device according to claim 1, **characterized in that** the number of upper control cables (5a) corresponds to the number of lower control cables (5b), wherein corresponding pairs of upper and lower control cables (5a, 5b) preferably extend over one another, and/or that at least three upper control cables (5a) and/or at least three lower control cables (5b) and/or at least three pairs of control cables (5a, 5b) are provided, and/or that the control cables (5) are fixedly anchored into the working head (3).

3. Device according to one of the preceding claims, **characterized in that** each control cable (5) is assigned its distinct actuator (6), and/or that each actuator (6) includes a drive motor and preferably electric motor and/or a guide wheel for the control cable (5).

4. Device according to one of the preceding claims, **characterized in that** at least one of the control cables includes a power line and/or a data line.

5. Device according to one of the preceding claims, **characterized in that** the scaffold (2) continuously surrounds the work surface (4), or consists of scaffolding elements discontinuously distributed around the work surface (4).

6. Device according to one of the preceding claims, **characterized in that** the working head (3) includes a lifting device for prefabricated components, preferably a gripping device and/or a suction device.

7. Device according to claim 6, **characterized in that** the control unit is configured to automatically or semi-automatically actuate the lifting device, on the basis of control information from a control file.

8. System including a device (1) according to one of the preceding claims, and an external computing unit (11) and/or a detection unit arranged on the device (1) or externally, and/or a crane (13).

9. System according to claim 8, **characterized in that** the device (1) according to the invention and the external computing unit (11) and/or external detection unit and/or the crane (13) each comprises a communications unit, in order to make a reciprocal or unilateral data transmission (12) possible.

10. System according to claim 8 or 9, **characterized in that** the detection unit is configured to recognize structures on the work surface (4), and to be able to transmit information about the appearance of the structures to the control unit or an external computing unit (11).

11. System according to one of the claims 8 to 10, **characterized in that** the crane (13) is a slewing tower crane.

12. Method for the automated or semi-automated building of stationary structures on a work surface (4) using a device (1) according to one of claims 1 to 7, or a system according to one of claims 8 to 11, wherein a sprayable building material is sprayed preferably freely onto the work surface (4), or onto existing structures on the work surface (4) out of a nozzle (7) held or arranged on the working head (3), and wherein a movement of the working head (3) is caused through a retracting or extending of the control cables (5).

13. Method according to claim 12, **characterized in that** the sprayable building material is shotcrete, wherein the method preferably relates to a wet- or dryspray method.

14. Method according to claim 12 or 13, **characterized in that** the movement of the working head (3) and the output of the sprayable building material and/or the transport of prefabricated components onto the work surface or on the work surface is controlled based on information from a control file.

## Revendications

1. Dispositif (1) permettant de construire des structures stationnaires sur une surface de travail (4),
dans lequel le dispositif (1) présente une ossature (2) qui est disposée autour de la surface de travail (4),
dans lequel une tête de travail (3) est prévue, laquelle est maintenue sur l'ossature (2) à l'aide de plusieurs câbles de commande (5) et disposée au-dessus de la surface de travail (4), la tête de travail (3) comprenant une buse (7) pour un matériau apte à être projeté et de préférence de la gunite, la buse (7) étant en liaison avec une source de matériau (9) au moyen d'une conduite (8),
dans lequel des câbles de commande supérieurs (5a) sont prévus, lesquels partent de l'ossature (2) au-dessus de la tête de travail (3),
dans lequel des câbles de commande inférieurs (5b) sont prévus, lesquels partent de l'ossature (2) en dessous de la tête de travail (3),
dans lequel tous les câbles de commande (5) peuvent être sortis de l'ossature (2) et rentrés dans l'ossature (2) pour modifier la position de la tête de travail (3), et
dans lequel une unité de commande est prévue, laquelle est reliée à des actionneurs (6) permettant de sortir et rentrer les câbles de commande (5) et conçue pour commander ces actionneurs (6) afin de modifier la position de la tête de travail (3),
dans lequel l'unité de commande est conçue pour commander, de manière automatique ou partiellement automatique, les actionneurs (6) et ainsi la position de la tête de travail (3) et/ou la distribution du matériau par le biais de la buse (7) sur la base d'informations de commande provenant d'un fichier de commande,
**caractérisé en ce que** le fichier de commande est un fichier BIM ou un fichier CAD et **en ce que** l'ossature (2) est réalisée de manière réglable en hauteur.

2. Dispositif selon la revendication 1, **caractérisé en ce que** le nombre de câbles de commande supérieurs (5a) correspond au nombre de câbles de commande inférieurs (5b), des paires correspondantes de câbles de commande supérieurs et inférieurs (5a, 5b) s'étendant de préférence un câble au-dessus de l'autre et/ou **en ce qu'**au moins trois câbles de commande supérieurs (5a) et/ou au moins trois câbles de commande inférieurs (5b) et/ou au moins trois paires de câbles de commande (5a, 5b) sont prévus et/ou **en ce que** les câbles de commande (5) sont ancrés fixement dans la tête de travail (3).

3. Dispositif selon l'une des revendications précédentes, **caractérisé en ce qu'**un actionneur (6) individuel est associé à chaque câble de commande (5) et/ou **en ce que** chaque actionneur (6) comprend un moteur d'entraînement et de préférence un moteur électrique et/ou une roue de guidage pour le câble de commande (5).

4. Dispositif selon l'une des revendications précédentes, **caractérisé en ce qu'**au moins un des câbles de commande comprend une ligne électrique et/ou une ligne de données.

5. Dispositif selon l'une des revendications précédentes, **caractérisé en ce que** l'ossature (2) entoure en continu la surface de travail (4) ou est constituée d'éléments d'ossature répartis de manière discontinue autour de la surface de travail (4).

6. Dispositif selon l'une des revendications précédentes, **caractérisé en ce que** la tête de travail (3) comprend un dispositif de levage pour éléments structuraux préfabriqués, de préférence un dispositif de préhension et/ou un dispositif d'aspiration.

7. Dispositif selon la revendication 6, **caractérisé en ce que** l'unité de commande est conçue pour commander également le dispositif de levage de manière automatique ou partiellement automatique, sur la base des informations de commande provenant d'un fichier de commande.

8. Système comprenant un dispositif (1) selon l'une des revendications précédentes et une unité de calcul externe (11) et/ou un appareillage de détection disposé sur le dispositif (1) ou de manière externe et/ou une grue (13).

9. Système selon la revendication 8, **caractérisé en ce que** le dispositif (1) selon l'invention et l'unité de calcul externe (11) et/ou l'appareillage de détection externe et/ou la grue (13) présentent chacun une unité de communication pour permettre une transmission de données (12) bidirectionnelle ou unidirectionnelle.

10. Système selon la revendication 8 ou 9, **caractérisé en ce que** l'appareillage de détection est conçu pour pouvoir reconnaître des structures sur la surface de travail (4) et transmettre des informations concernant l'aspect des structures à l'unité de commande ou à une unité de calcul externe (11).

11. Système selon l'une des revendications 8 à 10, **caractérisé en ce que** la grue (13) est une grue à tour pivotante.

12. Procédé permettant de construire de manière automatique ou partiellement automatique des structures stationnaires sur une surface de travail (4) au moyen d'un dispositif (1) selon l'une des revendications 1 à 7 ou d'un système selon l'une des revendications 8 à 11, dans lequel un matériau apte à être projeté est appliqué par projection, depuis une buse (7) maintenue ou disposée sur la tête de travail (3), librement sur la surface de travail (4) ou sur des structures existantes situées sur la surface de travail (4) et dans lequel un déplacement de la tête de travail (3) est engendré par l'entrée et la sortie des câbles de commande (5).

13. Procédé selon la revendication 12, **caractérisé en ce que** le matériau apte à être projeté est de la gunite, le procédé étant un procédé de projection par voie mouillée ou par voie sèche.

14. Procédé selon la revendication 12 ou 13, **caractérisé en ce que** le déplacement de la tête de travail (3) et la distribution du matériau apte à être projeté et/ou le transport d'éléments structuraux préfabriqués vers la surface de travail ou sur la surface de travail sont commandés au moyen d'informations provenant d'un fichier de commande.
